# EUROPEAN PATENT SPECIFICATION

(11) **EP 0 341 188 B1**
(45) Date of publication and mention of the grant of the patent: **01.12.1993**
(21) Application number: 89630084.5
(22) Date of filing: 02.05.1989
(51) Int. Cl.: C08J 5/18, C08L 23/02

(54) **Polyolefin films having improved barrier properties**
Polyolefin-Sperrschicht
Feuille barrière à base de polyoléfine

(30) Priority: 02.05.1988 US 188923
(43) Date of publication of application: 08.11.1989
(73) Proprietor: JAMES RIVER PAPER COMPANY, INC., Milford, Ohio 45150-2743 (US)
(72) Inventor: Yeh, Gene H., San Ramon California 94583 (US); Matray, Attila, Danville California 94526 (US); Ziegenhagen, Allyn J., Berkeley California 94707 (US)
(74) Representative: Schmitz, Jean-Marie

(56) References cited:
- DE-A- 2 344 982
- US-A- 3 230 191

## Description

The present invention concerns an extruded film according to the precharacterizing portion of claim 1.

This invention relates to extruded plastic films having a layer comprising a polyolefin. An important property of such films when they are used to package certain articles, especially food, is the ability of the film to act as a barrier to moisture, oxygen and aroma. This invention provides polyolefin films having improved barrier properties.

The extruded film of the present invention is defined according to the characterizing portion of claim 1.

The US-A-3 230 191 describes blends of polyethylene polymer and paraffin, the blend containing 80 parts by weight of a paraffin wax and 20 parts by weight of a solid linear ethylene polymer. Films are obtained possessing a high degree of moisture impermeability.

In accordance with this invention, the barrier properties of an extruded plastic film having a layer comprising a crystalline polyolefin are substantially improved by adding to the polyolefin a certain amount of wax. The amount of wax added depends on the type of polyolefin and the rate at which the film is cooled but generally the amount is between two and twelve percent, preferably between three and ten percent by weight based on the weight of the polyolefin. When the water vapor transmission rate (WVTR) of the film is plotted against the concentration of wax in this range, the graph forms a concave curve having a low point or nadir in the range. Within the range the wax reduces the water vapor transmission rate at least four fold, preferably at least ten fold, and at or near the low point, at least twenty fold. Referring to wax concentration at the low point of WVTR as C_{L}, the wax concentration preferably ranges from C_{L} minus 3 to C_{L} plus 3, more preferably from C_{L} minus 2 to C_{L} plus 2. The WVTR of the films of this invention is preferably less than 0.2, more preferably less than 0.1, and most preferably less than 0.05 g/645 cm²/24 hours (grams/100 square inches/24 Hours).

Figure 1 is a graph showing the relationship between water vapor transmission rate and the concentration of paraffin wax in propylene homopolymer film (curve A) and ethylene-propylene copolymer film (curve B).

Figure 2 is a graph showing the relationship between water vapor transmission rate, chill roll temperature, and the concentration of paraffin wax in polypropylene film.

Crystalline polyolefins include isotactic polypropylene, polybutylene, poly-4-methylpentene -1, copolymers of propylene with up to 7 percent ethylene by weight, copolymers of butylene with up to 5 percent ethylene by weight, and copolymers of propylene and butylene. The degree of crystallinity of the polyolefin is preferably greater than 25 percent, more preferably greater than 30 percent.

Even the most crystalline polyolefins have some amorphous regions. In the practice of this invention, it is believed that the wax is incompatible with the crystalline regions of the polyolefin and has limited compatibility with the amorphous regions. It is further believed that the wax crystallizes in the amorphous regions of the polyolefin, and that this phenomenon explains the significant improvement in barrier properties.

The polyethylene type wax preferably has an average chain length between 22 and 65 carbon atoms, a molecular weight between - 300 and 800, and a melting point between 52 and 88°C (125 and 190°F). These waxes include paraffin waxes, microcrystalline waxes, and intermediate waxes. Most perferred are paraffin waxes, which typically have an average chain length between 22 and 40 carbon atoms, a molecular weight between 300 and 450, and a melting point between 52 and 71°C (125 and 160°F). The paraffin wax preferably consists of a mixture of normal and nonnormal paraffins, with the normal paraffin content preferably being from 35 to 90 percent by weight. The paraffin wax preferably has a broad molecular weight distribution. For example, each fraction of chains containing a certain number of carbon atoms preferably represents less than 25 percent, more preferably less than 20 percent, of the wax. A paraffin wax having a broad molecular weight distribution provides better barrier properties than a paraffin wax having a narrow molecular weight distribution, which is believed to be due to the formation by the wax having the broad molecular weight distribution of crystallites that have a morphology that conforms better with the morphology of the amorphous regions of the polyolefin. Best results have been observed with a paraffin wax available commercially under the designation Chevron 143. It has a melting point of 62°C (143°F), an average chain length of 29 carbon atoms, an average molecular weight of 417, a normal paraffin content of 75 percent, and contains about 12 percent C₂₈ fraction, 12 percent C₂₉ fraction and 11 percent C₃₀ fraction (the three largest fractions in the wax).

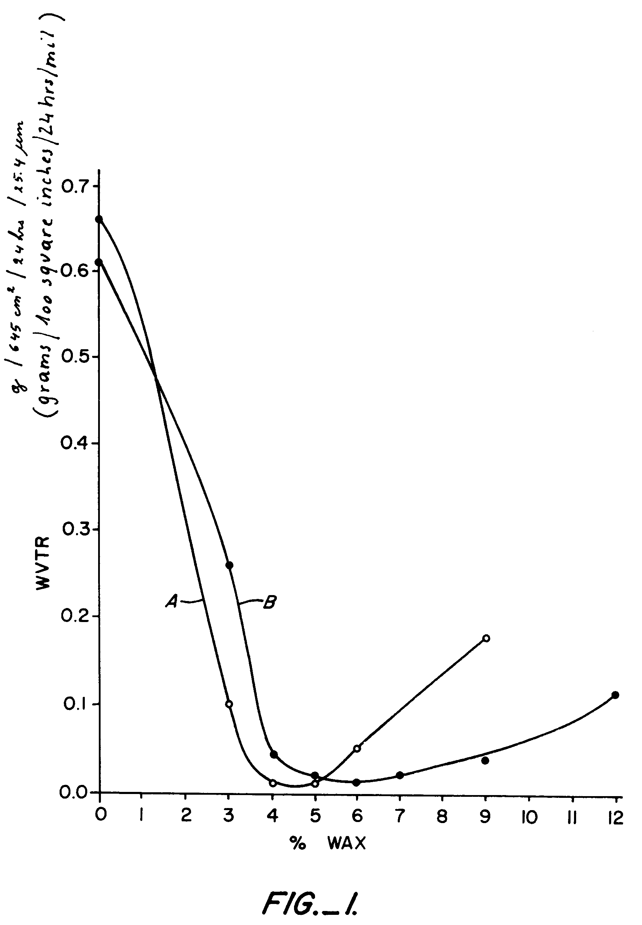

The amount of wax depends on the amorphousness of the polyolefin, which in turn depends on the type of polyolefin, the method of cooling the extruded film containing the polyolefin, and the thickness of the film. When the film is a single layer film of propylene homopolymer having a thickness between 25.4 and 50.8µm (one and two mils) and the film is cast extruded onto a chill roll having a temperature of about 4°C (39°F), maximum improvement in moisture barrier is obtained when the polypropylene contains between four and five percent wax, as shown by curve A in Figure 1. When this amount of wax is exceeded, the excess wax adversely affects the moisture barrier property, which is believed to be due to the wax exceeding its limit of compatibility with the amorphous region of the polypropylene. When the polyolefin is a copolymer of propylene and five percent ethylene, and the film is extruded under the same conditions, maximum improvement in moisture barrier is obtained when the amount of wax is six percent, as shown by curve B in Figure 1. Slightly more wax is required because the copolymer is more amorphous than the homopolymer. However, the copolymer is able to contain excess wax without as much adverse effect on moisture barrier, which is believed to be due to the ability of the amorphous region to absorb more of the excess wax.

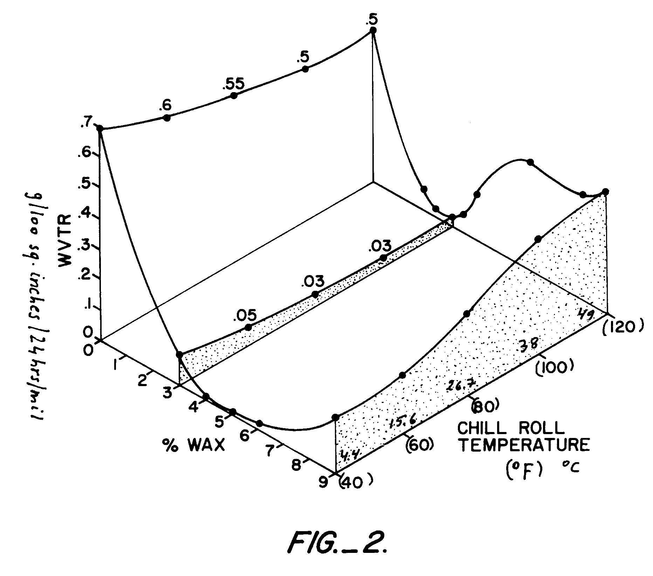

The temperature of the chill roll affects the extent of the amorphous region of the polyolefin, especially near the surface of the film contacting the chill roll. Decreasing the temperature of the chill roll has the effect of increasing the extent of the amorphous region, with the result that slightly more wax is required to achieve maximum improvement in moisture barrier, but excess wax has less adverse effect on moisture barrier, as shown in Figure 2. Hence, in practicing this invention on a large scale, it is desirable to cool the extruded film in order to broaden the tolerance specifications for the concentration of wax in the polyolefin. The film may be cooled by contacting it with a cooling medium. For cast film the cooling medium is normally a chill roll. For blown film, the cooling medium may be a fluid, such as water or forced air. Forced air may also be used on the other surface of cast film. The temperature of the cooling medium is preferably between 0 and 25°C (32 and 77°F).

For conventional crystalline polyolefin films containing no wax, decreasing the temperature of the chill roll has the effect of making the moisture barrier worse, which is the opposite of the effect observed for most of the range of wax concentration within the scope of this invention.

The film of this invention may be annealed to improve the barrier properties of the film. The film may be annealed by heating it to an elevated temperature, preferably ranging from the melting point of the wax to a temperature about twenty degrees Celsius less than the softening point of the polyolefin, and then rapidly cooling the film, such as by quenching the film in water. This aspect of the invention is illustrated in Example 23.

When the proper amount of wax is added to the polyolefin, it has a very slight effect on the clarity of the polyolefin layer. For example, when film of the ethylene-propylene copolymer referred to in Figure 1 contains six percent paraffin wax, it has a haze value, measured in accordance with ASTM-Dl003-82, of 14 compared to a haze value of 8 for the corresponding film containing no wax. However, when the wax concentration is increased to nine percent and twelve percent, the haze value is increased to 55 and 88, respectively by the excess wax. The effect of the excess wax on the clarity of the film can be mitigated by annealing the film. For example, when the films containing the excess wax are heated to 93°C (200°F) and then quenched, the haze values are reduced to 13.5 and 18.5, respectively. The annealing also improves the WVTR of the films.

The adverse effect of excess wax can also be mitigated by adding to the polyolefin a minor amount, preferably less than twenty percent, more preferably less than twelve percent, of an amorphous polymer compatible with the wax. The amorphous polymer preferably has limited compatibility with the polyolefin. This embodiment is illustrated in Example 17.

As the extruded film cools, the interior of the polyolefin layer crystallizes, leaving an amorphous region near each surface of the layer, which is where the wax is believed to migrate. However the effect of the wax is not a surface effect because no wax is observed on the surface when the proper amount of wax is employed, and the moisture barrier of the film is not adversely affected by creasing the film. On the other hand, because the wax is concentrated near each surface, with the interior of the polyolefin layer being more crystalline because of its slower rate of cooling, increasing the thickness of the film does not require a corresponding increase in the amount of wax added to the polyolefin.

Although the wax tends to concentrate near the surface of the polyolefin layer, the film is preferably prepared by extruding a blend of the polyolefin and substantially all of the wax as a core layer in a coextruded film, even when only a single layer film is desired. For example, if it is desired to prepare a single layer film of polypropylene containing three percent wax, the film is preferably prepared by coextruding a core layer containing nine percent wax sandwiched between skin layers of polypropylene containing no wax, with the thickness of each layer being the same. This method of preparing the film also avoids the problem of plate-out of the wax on the chill roll. In order to equalize the viscosities of the layers, the polypropylene in the core layer preferably has a lower melt index than the polypropylene in the skin layers. Although the wax is in the core layer initially, it migrates toward each surface as the core layer crystallizes. Hence, as used herein, the term "polyolefin layer" includes adjacent layers of crystalline polyolefins that are coextruded together.

The films of this invention may be monoaxially or biaxially oriented to improve their properties. Biaxial orientation may be accomplished in accordance with conventional methods, such as by blowing tubular film or by stretching cast film using a tenter frame. The oriented films may be used as heat shrinkable films to package various articles, particularly food, to provide excellent barrier to moisture, oxygen and aroma.

This invention has been described with particular reference to moisture barrier, in part because it serves as a basis to determine the optimum amount of wax to add to the polyolefin layer, but addition of the wax also substantially improves other barrier properties, such as by lowering the oxygen transmission rate (OTR), as illustrated in Examples 4, 7 and 8, and by lowering the aroma transmission rate, as illustrated in Example 12. The wax reduces the OTR at least four fold, preferably at least ten fold, and reduces the aroma transmission rate at least two fold, preferably at least four fold.

The film of this invention may be a single layer film or a coextruded film wherein other resins form other layers of the film. However, a polyolefin layer containing the wax (either initially or by migration) preferably forms an outer surface of the coextruded film. The film may also be laminated to a substrate, such as oriented polypropylene or paper or paperboard, such as by extrusion coating or by means of an adhesive. However, to prevent migration of the wax to paper, the paper and the wax-containing polyolefin layer are preferably separated by a barrier.

The polyolefin layer may contain minor amounts, preferably less than ten percent, of conventional polymer additives, including colorants, as illustrated in Example 20. However, the polyolefin layer preferably comprises at least eighty percent of crystalline polyolefin. When the polyolefin is propylene homopolymer, the amount of wax is preferably between 2 and 7 percent. When the polyolefin is a copolymer of propylene and ethylene, the amount of wax is preferably between 3 and 9 percent. When the polyolefin is polybutylene, the amount of wax is preferably between 3 and 10 percent. When the polyolefin is a copolymer of butylene and ethylene, the amount of wax is preferably between 3 and 12 percent. The polyolefin layer may comprise a blend of crystalline poly-alpha-olefins.

In the following examples WVTR was measured at 38°C (100°F) and 90 percent relative humidity in accordance with ASTM E96 and TAPPI Standard T464. All percentages are by weight.

### Comparative Example A and Examples 1-3

Single layer films were prepared by extruding blends of polybutylene (PB-OllO) with various amounts of a paraffin wax available commercially under the designation Chevron 143. The films were cooled immediately after extrusion by contacting them with a chill roll having a temperature of 10°C (50°F). The WVTR of each film was measured. The results are shown in the Table.

### Comparative Example B and Examples 4-8

Examples A and 1-3 were repeated except polypropylene (Shell 5384) was substituted for the polybutylene and the chill roll temperature was 4°C (39°F). The results are shown in the Table and in Figure 1 (curve A). In addition, the OTR of the films of Examples B, 4, 7 and 8 were measured at 22°C (72°F) and 45 percent relative humidity in accordance with ASTM-D3985-81. The respective values per 25.4µm (mil) of film thickness were 243, 8.2, 11.5, and 85 cc/645cm²/24hrs (cc/100 square inches/24 hours). A graph of these values plotted against wax concentration would form a concave curve having a low point at or near the same wax concentration as the low point for WVTR.

### Comparative Example C and Examples 9-15

Examples B and 4-8 were repeated except a copolymer of propylene and about five percent ethylene (himont SD-062) was substituted for the polypropylene. The results are shown in the Table and in Figure 1 (curve B). Figure 1 shows that the copolymer requires more wax than the homopolymer to achieve an optimum reduction in WVTR but excellent results are obtained over a broader range of wax concentration. In other words, the meniscus of the curve is shifted to the right and is broader. This is believed to be due to the fact that the copolymer has a higher proportion of amorphous phase. In addition, the aroma transmission rate of the films of Examples C and 12 were measured using a solution of one percent amyl acetate in propylene glycol as the aromatic substance. The aroma transmission rate of the film of Example 12 was 0.34 mg/645cm²/24hrs (mg/100 square inches/24 hours) compared to a rate of 1.7 for the film of Example C, a five fold reduction.

### Example 16

Example 15 was repeated except the temperature of the chill roll was increased to 10°C. As shown in the Table, this increase in temperature resulted in a substantial increase in the WVTR.

### Example 17

Example 16 was repeated except the blend contained ten percent by weight of a copolymer of ethylene and 18 percent vinyl acetate. As shown in the Table, the WVTR was substantially reduced compared to the film of Example 16. The film was also much clearer. These results are believed to be due to absorption of excess wax by the ethylene-vinyl acetate copolymer. This example illustrates the use of an amorphous polymer to mitigate the adverse effect of excess wax on WVTR and clarity.

### Example 18

Example 12 was repeated except the temperature of the chill roll was 10°C and n-octacosane was employed as the wax. As shown in the Table, the WVTR was substantially increased compared to the film of Example 12. While some of the increase is attributable to the higher temperature of the chill roll, more of the increase is believed to be attributable to the narrow molecular weight distribution of the wax. Although the wax employed in the previous examples has about the same average chain length as octacosane, it has a broader molecular weight distribution, which is believed to provide better moisture barrier by producing crystallites or platelets that form a better boundary layer in the amorphous regions of the polyolefin.

### Example 19

Example 11 was repeated except the blend contained ten percent titanium dioxide pigment. As shown in the Table, the inorganic pigment did not have a substantial adverse effect on the WVTR of the film.

### Example 20

Example 7 was repeated except a microcrystalline wax having a melting point between 77°C and 82°C (170 and 180°F) (Witco W-145) was substituted for the paraffin wax and the chill roll temperature was 10°C. The results are shown in the Table.

### Example 21

Example 20 was repeated except an intermediate wax (Chevron 159) was substituted for the microcrystalline wax. The wax had a melting point of 71°C (159°F), an average chain length of 37 carbon atoms, an average molecular weight of 520, and a normal paraffin content of 45 percent. As shown in the Table, the intermediate wax reduced the WVTR more than the microcrystalline wax but not as much as the paraffin wax.

In the following table, the unit for gauge (thickness) is µm (mil) and the units for WVTR are g/645cm²/24hrs (grams/100 square inches/24 hours).

| Example | Polyolefin | Wax | Temp. | Gauge | | WVTR | WVTR/25.4µm (WVTR/mil) |
|---|---|---|---|---|---|---|---|
| | | | | (mil) | µm | | |
| A | PB | None | 10°C | 1.5 | 38.1 | 0.62 | 0.93 |
| 1 | " | 3% | " | 1.2 | 30.5 | 0.06 | 0.07 |
| 2 | " | 4.5% | " | 1.5 | 38.1 | 0.03 | 0.05 |
| 3 | " | 6% | " | 1.3 | 33.0 | 0.03 | 0.04 |
| B | PP | None | 4°C | 1.0 | 25.4 | 0.66 | 0.66 |
| 4 | " | 3% | " | 1.0 | 25.4 | 0.10 | 0.10 |
| 5 | " | 4% | " | 1.1 | 27.9 | 0.02 | 0.02 |
| 6 | " | 5% | " | 1.2 | 30.5 | 0.01 | 0.01 |
| 7 | " | 6% | " | 1.1 | 27.9 | 0.03 | 0.03 |
| 8 | " | 9% | " | 1.0 | 25.4 | 0.18 | 0.18 |
| C | coPP | None | " | 1.2 | 30.5 | 0.51 | 0.61 |
| 9 | " | 3% | " | 1.2 | 30.5 | 0.22 | 0.26 |
| 10 | " | 4% | " | 1.3 | 33.0 | 0.03 | 0.04 |
| 11 | " | 5% | " | 1.3 | 33.0 | 0.02 | 0.03 |
| 12 | " | 6% | " | 1.2 | 30.5 | 0.01 | 0.01 |
| 13 | " | 7% | " | 1.2 | 30.5 | 0.02 | 0.02 |
| 14 | " | 9% | " | 1.2 | 30.5 | 0.05 | 0.06 |
| 15 | " | 12% | " | 1.2 | 30.5 | 0.10 | 0.12 |
| 16 | " | " | 10°C | 1.2 | 30.5 | 0.34 | 0.40 |
| 17 | coPP+EVA | " | " | 1.6 | 40.6 | 0.08 | 0.13 |
| 18 | coPP | 6% | " | 1.5 | 38.1 | 0.16 | 0.24 |
| 19 | coPP+TiO₂ | 5% | 4°C | 1.4 | 35.5 | 0.03 | 0.04 |
| 20 | PP | 6% | 10°C | 1.4 | 35.5 | 0.11 | 0.15 |
| 21 | " | " | " | 1.3 | 33.0 | 0.06 | 0.09 |

### Example 22

Example 14 was repeated except the chill roll was at ambient temperature. After being allowed to cool, the film was annealed by being heated from ambient temperature to 93°C (200°F), and then quenched in ice water. The film had a WVTR of 0.14 before being annealed and a WVTR of 0.06 after being annealed. The haze of the film was reduced from 55 to 13.5. This example illustrates the beneficial effect of annealing on the films of this invention.

### Example 23

A three-layer film was coextruded onto an oriented polypropylene film. The coextruded film consisted of skin layers of ethylene-methylacrylate copolymer and a core layer consisting of a blend of polypropylene and 9 percent by weight of a paraffin wax. The laminate had a WVTR of about 0.15. Without the wax, the laminate would have a WVTR of about 0.35. This example illustrates the preparation of a laminate from a coextruded film prepared in accordance with this invention.

## Claims

1. An extruded film having a layer comprising a crystalline polyolefin selected from the group consisting of isotactic polypropylene, polybutylene, poly-4-methylpentene-1, copolymers of propylene with up to 7 percent ethylene by weight, copolymers of butylene with up to 5 percent ethylene by weight, and copolymers of propylene and butylene, characterized in that the layer contains an amount of wax which reduces the water vapor transmission rate of the layer to be less than 0.2 g/645 cm²/24h (0.2 g/100 square inches/24h), the amount of wax being between two and twelve percent based on the weight of the polyolefin, the wax being a polyethylene type wax having a molecular weight between about 300 and 800.

2. The extruded film of claim 1 characterized in that the wax is incompatible with the crystalline region of the polyolefin.

3. The extruded film of claim 1, characterized in that the wax is a paraffin wax.

4. The extruded film of claim 1 characterized in that the polyolefin is propylene homopolymer and the amount of wax is between 2 and 7 percent by weight.

5. The extruded film of claim 1 characterized in that the polyolefin is a copolymer of propylene and up to 7 percent ethylene, and the amount of wax is between 3 and 9 percent by weight.

6. The extruded film of claim 1 characterized in that the polyolefin is butylene homopolymer and the amount of wax is between 3 and 10 percent by weight.

7. The extruded film of claim 1 characterized in that the polyolefin is a copolymer of butylene and ethylene and the amount of wax is between 3 and 12 percent.

8. The extruded film of claim 1 characterized in that the film has been contacted with a cooling medium immediately after being extruded.

9. The extruded film of claim 8 characterized in that the temperature of the cooling medium is between 0 and 25°C.

10. The extruded film of claim 1 characterized in that the layer contains up to 20 percent by weight of an amorphous polymer compatible with the wax.

11. The extruded film of claim 1 characterized in that the film is oriented.

12. The extruded film of claim 1 characterized in that the film has been annealed.

13. A method of making an extruded film as claimed in claim 1 having a layer comprising a crystalline polyolefin containing an amount of wax which substantially reduces the water vapor transmission rate of the layer, which method comprises extruding the film as a coextrusion comprising a core layer comprising a crystalline polyolefin and substantially all of the wax, the core layer being sandwiched between layers of crystalline polyolefin containing substantially no wax.

## Patentansprüche

1. Ein extrudierter Film mit einer Schicht, die ein kristallines Polyolefin umfaßt, das ausgewählt ist aus der Gruppe bestehend aus isotaktischem Polypropylen, Polybutylen, Poly-4-methylpenten-1, Copolymeren von Propylen mit bis zu 7 Gew.-% Ethylen, Copolymeren vom Butylen mit bis zu 5 Gew.-% Ethylen und Copolymeren von Propylen und Butylen,
dadurch gekennzeichnet, daß
die Schicht eine Menge von Wachs enthält, die die Wasserdampf-Durchlaßrate der Schicht auf weniger als 0,2 g/645 cm²/24 h (0,2 g/100 Zoll²/24 h) verringert, wobei die Wachsmenge zwischen 2 und 12 Prozent liegt, bezogen auf das Gewicht des Polyolefins und das Wachs ein polyethylenartiges Wachs mit einem Molekulargewicht zwischen etwa 300 und 800 ist.

2. Der extrudierte Film nach Anspruch 1, dadurch gekennzeichnet, daß das Wachs mit dem kristallinen Bereich des Polyolefins unverträglich ist.

3. Der extrudierte Film nach Anspruch 1, dadurch gekennzeichnet, daß das Wachs ein Paraffinwachs ist.

4. Der extrudierte Film nach Anspruch 1, dadurch gekennzeichnet, daß das Polyolefin Propylenhomopolymer ist und die Wachsmenge zwischen 2 und 7 Gew.-% liegt.

5. Der extrudierte Film nach Anspruch 1, dadurch gekennzeichnet, daß das Polyolefin ein Copolymer von Propylen und bis zu 7% Ethylen ist und die Wachsmenge zwischen 3 und 9 Gew.-% liegt.

6. Der extrudierte Film nach Anspruch 1, dadurch gekennzeichnet, daß das Polyolefin Butylenhomopolymer ist und die Wachsmenge zwischen 3 und 10 Gew.-% liegt.

7. Der extrudierte Film nach Anspruch 1, dadurch gekennzeichnet, daß das Polyolefin ein Copolymer von Butylen und Ethylen ist und die Wachsmenge zwischen 3 und 12% liegt.

8. Der extrudierte Film nach Anspruch 1, dadurch gekennzeichnet, daß der Film unmittelbar nach dem Extrudieren mit einem Kühlmedium in Berührung gebracht worden ist.

9. Der extrudierte Film nach Anspruch 8, dadurch gekennzeichnet, daß die Temperatur des Kühlmediums zwischen 0 und 25°C liegt.

10. Der extrudierte Film nach Anspruch 1, dadurch gekennzeichnet, daß die Schicht bis zu 20 Gew.-% eines mit dem Wachs verträglichen amorphen Polymers enthält.

11. Der extrudierte Film nach Anspruch 1, dadurch gekennzeichnet, daß der Film orientiert ist.

12. Der extrudierte Film nach Anspruch 1, dadurch gekennzeichnet, daß der Film durch Erwärmen entspannt worden ist.

13. Ein Verfahren zum Herstellen eines extrudierten Films, wie er in Anspruch 1 beansprucht ist, wobei der Film eine Schicht aufweist, die ein kristallines Polyolefin umfaßt, das eine Menge an Wachs enthält, die die Wasserdampf-Durchlaßrate der Schicht beträchtlich verringert, wobei das Verfahren das Extrudieren des Filmes als eine Coextrusion umfaßt, die eine Kernschicht umfaßt, die ein kristallines Polyolefin und im wesentlichen das gesamte Wachs umfaßt, wobei die Kernschicht sandwichartig zwischen Schichten aus kristallinem Polyolefin liegt, die im wesentlichen kein Wachs enthalten.

## Revendications

1. Un film extrudé comprenant une couche comprenant une polyoléfine cristalline choisie dans le groupe consistant en polymères isotactiques de polypropylène, polybutylène, poly-4-methylpentène-1, des copolymères de propylène avec jusqu'à 7 % en poids d'éthylène, des copolymères de butylène avec jusqu'à 5 % en poids d'éthylène, et des copolymères de propylène et butylène, caractérisé en ce que la couche contient une quantité de cire qui diminue le taux de transmission de vapeur d'eau de la couche jusqu'à être inférieur à 0,2 g/645 cm²/24 h (0,2 g/100 pouces²/h), la quantité de cire étant entre 2 et 12 % basée sur le poids de la polyoléfine, la cire étant une cire de type polyéthylène ayant un poids moléculaire entre 300 et 800.

2. Le film extrudé selon la revendication 1 caractérisé en ce que la cire est incompatible avec la région cristalline de la polyoléfine.

3. Le film extrudé selon la revendication 1 caractérisé en ce que la cire est une cire de paraffine.

4. Le film extrudé selon la revendication 1 caractérisé en ce que la polyoléfine est un homopolymère de propylène et la quantité de cire est entre 2 et 7 % en poids.

5. Le film extrudé selon la revendication 1 caractérisé en ce que la polyoléfine est un copolymère de propylène et jusqu'à 7 % d'éthylène, et la quantité de cire est entre 3 et 9 % en poids.

6. Le film extrudé selon la revendication 1 caractérisé en ce que la polyoléfine est du homopolymère de butylène et la quantité de cire est entre 3 et 10 % en poids.

7. Le film extrudé selon la revendication 1 caractérisé en ce que la polyoléfine est un copolymère de butylène et d'éthylène et la quantité de cire est entre 3 et 12 %.

8. Le film extrudé selon la revendication 1 caractérisé en ce que le film a été mis en contact avec un milieu de refroidissement immédiatement après avoir été extrudé.

9. Le film extrudé selon la revendication 8 caractérisé en ce que la température du milieu de refroidissement est entre 0 et 25°C.

10. Le film extrudé selon la revendication 1 caractérisé en ce que la couche contient jusqu'à 20 % en poids d'un polymère amorphe compatible avec la cire.

11. Le film extrudé selon la revendication 1 caractérisé en ce que le film est orienté.

12. Le film extrudé selon la revendication 1 caractérisé en ce que le film a été recuit.

13. Un procédé de fabrication d'un film extrudé tel que revendiqué dans la revendication 1 ayant une couche comprenant une polyoléfine cristalline contenant une quantité de cire qui sensiblement réduit le taux de transmission de la vapeur d'eau de la couche, laquelle méthode comprend extruder le film par coextrusion comprenant une couche centrale comprenant une polyoléfine cristalline et sensiblement la totalité de la cire, la couche centrale étant en sandwich entre des couches de polyoléfine cristalline ne contenant sensiblement aucune cire.
